# EUROPEAN PATENT APPLICATION

(11) **EP 4 145 576 A2**
(43) Date of publication of application: **08.03.2023**
(21) Application number: 22756384.8
(22) Date of filing: 20.01.2022
(51) Int. Cl.: H01M 10/04, H01M 50/531, B26D 7/08, B26D 7/02

(54) **ELECTRODE ASSEMBLY AND METHOD FOR MANUFACTURING SAME, CYLINDRICAL BATTERY CELL COMPRISING ELECTRODE ASSEMBLY, AND BATTERY PACK AND AUTOMOBILE COMPRISING CYLINDRICAL BATTERY CELL**

(30) Priority: 19.02.2021 KR 20210022896; 05.08.2021 KR 20210103388; 15.10.2021 KR 20210137200; 20.12.2021 KR 20210183106
(71) Applicant: LG Energy Solution, Ltd., Seoul 07335 (KR)
(72) Inventor: CHUNG, Joo-Young, Daejeon 34122 (KR); KIM, Min-Woo, Daejeon 34122 (KR); BAE, Sang-Ho, Daejeon 34122 (KR); KIM, Do-Gyun, Daejeon 34122 (KR); JUNG, Su-Taek, Daejeon 34122 (KR); LEE, Kwan-Hee, Daejeon 34122 (KR); KIM, Sue-Jin, Daejeon 34122 (KR); LEE, Yun-Ju, Daejeon 34122 (KR); RYU, Duk-Hyun, Daejeon 34122 (KR)
(74) Representative: Goddar, Heinz J.
(86) International application number: PCT/KR2022/001079
(87) International publication number: WO 2022/177179

(57) **Abstract**

An electrode assembly of the present disclosure has a jelly-roll type structure in which a first electrode current collector and a second electrode current collector each having a sheet shape and a separator located between the first electrode current collector and the second electrode current collector are wound in one direction, wherein at least one of the first electrode current collector and the second electrode current collector includes an uncoated portion exposed to outside of the separator in a longitudinal direction of the electrode assembly on a long side end portion, wherein a cutting line is formed in the longitudinal direction of the electrode assembly in at least one of the uncoated portion of the first electrode current collector and the uncoated portion of the second electrode current collector, wherein the uncoated portion in which the cutting line is formed is divided into a remaining area remaining to protrude in a winding axis direction with respect to the cutting line and a bent target area bent in a preset direction, wherein at least a part of an uncoated portion included in the bent target area is bent to have a plurality of layers overlapping in a bending direction of a certain uncoated portion.

## Description

### TECHNICAL FIELD

The present application claims priority to Korean Patent Application Nos. 10-2021-0022896 and 10-2021-0183106 respectively filed on February 19, 2021 and December 20, 2021 in the Republic of Korea, the disclosures of which are incorporated herein by reference.

The present disclosure relates to an electrode assembly, a method of manufacturing the same, a cylindrical battery cell including the electrode assembly, and a battery pack and a vehicle including the cylindrical battery cell.

### BACKGROUND ART

Secondary batteries have high applicability according to product groups and electrical characteristics such as high energy density, and thus, are commonly applied not only to portable devices but also to electric vehicles (EVs) or hybrid vehicles (HEVs) driven by electric power sources.

Because secondary batteries may radically reduce the use of fossil fuel and do not generate any by-products that come with energy consumption, the secondary batteries are gaining attention as a new alternative energy source for improving eco-friendliness and energy efficiency.

Types of secondary batteries that are currently widely used include lithium-ion batteries, lithium polymer batteries, nickel cadmium batteries, nickel hydride batteries, and nickel zinc batteries. An operating voltage of a unit secondary battery cell, that is, a unit battery cell, ranges from about 2.5 V to about 4.5 V. Accordingly, when a higher output voltage is required, a battery pack may be configured by connecting a plurality of battery cells in series. Also, a battery pack may be configured by connecting a plurality of battery cells in parallel according to charge/discharge capacity required for the battery pack. Accordingly, the number of battery cells included in a battery pack and an electrical connection type may be set in various ways according to a required output voltage and/or charge/discharge capacity.

As types of unit secondary battery cells, cylindrical, prismatic, and pouch-type battery cells are known. In the case of a cylindrical battery cell, a separator that is an insulator is located between a positive electrode and a negative electrode, and wound to form a jelly-roll type electrode assembly, and a battery is formed by inserting the electrode assembly into a battery can. An electrode tab having a strip shape may be connected to an uncoated portion of each of the positive electrode and the negative electrode, and the electrode tab electrically connects the electrode assembly and an electrode terminal exposed to the outside. For reference, a positive electrode terminal is a cap plate of a sealing body for sealing an opening of the battery can, and a negative electrode terminal is the battery can. However, a conventional cylindrical battery cell having such a structure has problems in that, because current is concentrated on a strip-shaped electrode tab coupled to a positive electrode uncoated portion or a negative electrode uncoated portion, resistance is high, a large amount of heat is generated, and current collecting efficiency is poor.

For a small cylindrical battery cell having a form factor of 18650 or 21700, resistance and heat are not a big issue. However, when a form factor is increased to apply a cylindrical battery cell to an electric vehicle, a large amount of heat may be generated around an electrode tab during a rapid charging process and the cylindrical battery cell may catch fire.

In order to solve this problem, a cylindrical battery cell (so-called tab-less cylindrical battery cell) having a structure in which a positive electrode uncoated portion and a negative electrode uncoated portion are respectively located at an upper end and a lower end of a jelly-roll type electrode assembly and a current collecting plate is welded to each uncoated portion to improve current collecting efficiency has been proposed.

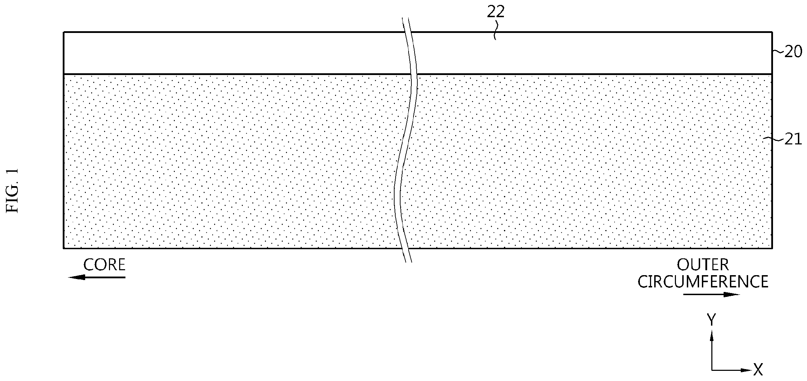

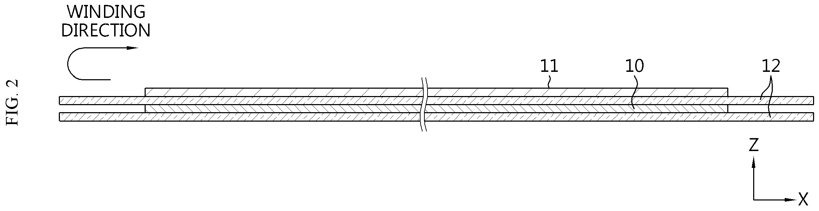

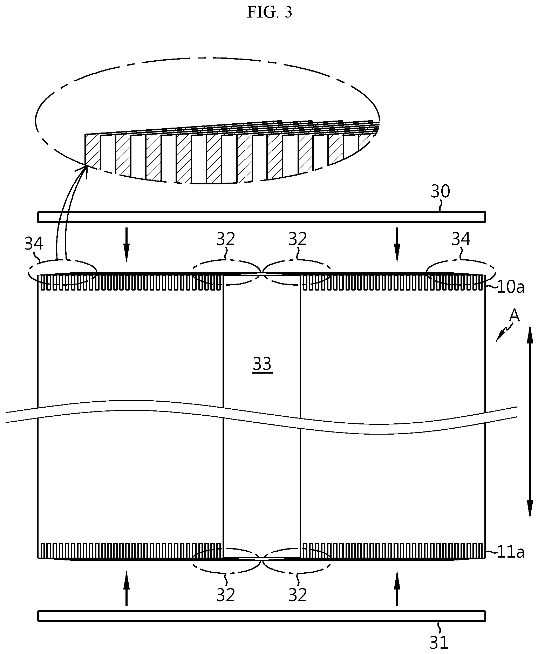

FIGS. 1 through 3 are views illustrating a process of manufacturing a tab-less cylindrical battery cell. FIG. 1 illustrates a structure of an electrode plate. FIG. 2 illustrates a winding process of the electrode plate. FIG. 3 illustrates a process of welding a current collecting plate to a bent surface of an uncoated portion.

Referring to FIGS. 1 through 3, a positive electrode plate 10 and a negative electrode plate 11 have a structure in which an active material 21 is coated on a current collector 20 having a sheet shape, and include an uncoated portion 22 on a long side in a winding direction X.

An electrode assembly A is manufactured by sequentially stacking the positive electrode plate 10 and the negative electrode plate 11 along with two separators 12 as shown in FIG. 2 and then winding the same in one direction (i.e., the winding direction X). In this case, uncoated portions of the positive electrode plate 10 and the negative electrode plate 11 are located in opposite directions. Positions of the positive electrode plate 10 and the negative electrode plate 11 may be opposite to those illustrated.

After a winding process, an uncoated portion 10a of the positive electrode plate 10 and an uncoated portion 11a of the negative electrode plate 11 are bent toward a core. Next, current collecting plates 30, 31 are respectively welded to the uncoated portions 10a, 11a.

Because separate electrode tabs are not coupled to the uncoated portion 10a of the positive electrode plate 10 and the uncoated portion 11a of the negative electrode plate 11, the current collecting plates 30, 31 are connected to external electrode terminals, and a current path having a large cross-sectional area is formed in a winding axis direction (see an arrow) of the electrode assembly A, the resistance of the battery cell may be reduced. This is because resistance is inversely proportional to a cross-sectional area of a path through which current flows.

In the tab-less cylindrical battery cell, in order to improve welding characteristics of the uncoated portions 10a, 11a and the current collecting plates 30, 31, the uncoated portions 10a, 11a should be bent as flat as possible by applying strong pressure to welding points of the uncoated portions 10a, 11a.

To bend the uncoated portions 10a, 11a, a jig for pressing the uncoated portions 10a, 11a toward the core of the electrode assembly A is used.

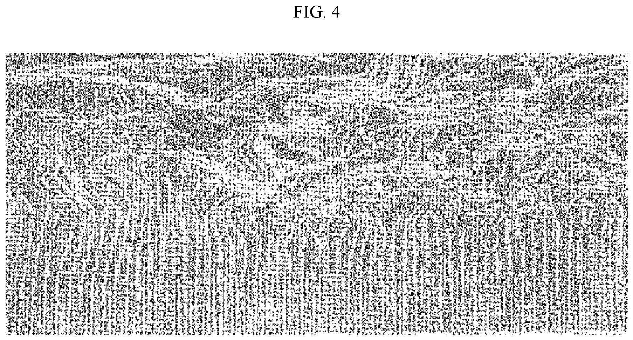

FIG. 4 is an enlarged photograph illustrating, when an uncoated portion is bent toward a core in a radial direction by using a jig and a part of a bent portion is cut in a longitudinal direction of an electrode assembly, a bent shape of the uncoated portion.

Referring to FIG. 4, it is found that the bent shape of the uncoated portion is not uniform, and the uncoated portion is irregularly deformed and bent. In particular, the degree of deformation of the uncoated portion increases toward the core of the electrode assembly. This is because stress applied by the jig increases as the uncoated portion is located closer to the core of the electrode assembly.

When the bent shape of the uncoated portion is not uniform, a bent surface is not flat and thus it is not easy to weld a current collecting plate. Also, when the uncoated portion under the bent surface is irregularly deformed, stress causing the irregular deformation of the uncoated portion may affect a nearby separator, and thus, the separator may be torn or an active material layer may be broken, resulting in an internal short circuit. Once the internal short circuit occurs, overcurrent may flow, a temperature of a cylindrical battery cell may rapidly rise, leading to a fire or explosion of the cylindrical battery cell.

### DISCLOSURE

### Technical Problem

The present disclosure is designed to solve the problems of the related art, and therefore the present disclosure is directed to providing a method of manufacturing an electrode assembly in which, when an uncoated portion of a tab-less cylindrical battery cell is bent, a bent shape of the uncoated portion is uniform, and an electrode assembly manufactured by using the method.

The present disclosure is also directed to providing a cylindrical battery cell including an electrode assembly manufactured by using an improved method.

The present disclosure is also directed to providing an electrode assembly with improved energy density and reduced resistance.

The present disclosure is also directed to providing a cylindrical battery cell including an electrode assembly having an improved structure, a battery pack including the cylindrical battery cell, and a vehicle including the battery pack.

However, the technical purpose to be solved by the present disclosure are not limited to the above, and other objects not mentioned herein will be clearly understood by one of ordinary skill in the art from the following disclosure.

### Technical Solution

An electrode assembly according to an aspect of the present disclosure has a jelly-roll type structure in which a first electrode current collector and a second electrode current collector each having a sheet shape and a separator located between the first electrode current collector and the second electrode current collector are wound in one direction, wherein at least one of the first electrode current collector and the second electrode current collector includes an uncoated portion exposed to outside of the separator in a longitudinal direction of the electrode assembly on a long side end portion, wherein a cutting line is formed in the longitudinal direction of the electrode assembly in at least one of the uncoated portion of the first electrode current collector and the uncoated portion of the second electrode current collector, wherein the uncoated portion in which the cutting line is formed is divided into a remaining area remaining to protrude in a winding axis direction with respect to the cutting line and a bent target area bent in a preset direction, wherein at least a part of an uncoated portion included in the bent target area is bent to have a plurality of layers overlapping in a bending direction of a certain uncoated portion.

Preferably, a current collecting plate having a shape corresponding to a shape of the bent target area may be coupled to the uncoated portion of the bent target area.

Preferably, the current collecting plate may be welded to an uncoated portion bent area in the bent target area bent to have a plurality of overlapping layers.

Preferably, the cutting line may be formed by cutting at least once.

In an aspect, the cutting line may be formed by a cutter that ultrasonically vibrates in the winding axis direction of the electrode assembly.

In another aspect, a total height of the current collecting plate and the uncoated portion after the current collecting plate may be coupled to the uncoated portion of the bent target area corresponds to a height of the uncoated portion remaining to protrude in a winding axis direction of the remaining area.

In another aspect, a total height of the current collecting plate of the bent target area and the uncoated portion under the current collecting plate may be equal to a height of the uncoated portion protruding in the remaining area.

Preferably, there may be a gap between any one uncoated portion of uncoated portions of the remaining area and the other uncoated portion.

Preferably, an electrolytic solution may flow through the gap.

In an aspect, the certain uncoated portion may be bent along the cutting line.

Preferably, the bending direction of the certain uncoated portion may be a radial direction of the electrode assembly.

Preferably, the bending direction of the certain uncoated portion may be a core direction of the electrode assembly.

Preferably, a shape of the bent target area may extend in a radial direction when viewed in the winding axis direction of the electrode assembly.

Preferably, a shape of the bent target area may be a shape radially extending outward from a core center of the electrode assembly when viewed in the winding axis direction of the electrode assembly.

Preferably, a shape of the bent target area may be a shape radially extending outward in two or more directions from the core center of the electrode assembly when viewed in the winding axis direction of the electrode assembly.

Preferably, a shape of the bent target area may be a cross shape extending outward from a core center of the electrode assembly when viewed in the winding axis direction of the electrode assembly.

Preferably, a shape of the bent target area may be a shape radially extending outward from a core center of the electrode assembly when viewed in the winding axis direction of the electrode assembly, wherein the cutting line has an arc shape curved toward a core of the electrode assembly.

In an aspect, at least a part of the uncoated portion included in the bent target area may be bent toward a core direction of the electrode assembly.

Preferably, at least a part of the uncoated portion included in the bent target area may be bent to have at least three layers overlapping in a radial direction of the electrode assembly.

Preferably, at least a part of the uncoated portion included in the bent target area may be bent to have at least four layers overlapping in a radial direction of the electrode assembly.

Preferably, at least a part of the uncoated portion included in the bent target area may be bent to have at least five layers overlapping in a radial direction of the electrode assembly.

In an aspect, an electrode plate including the first electrode current collector and an active material layer formed on at least one surface of the first electrode current collector may be formed, wherein the electrode plate includes an insulating coating layer formed at a boundary between the active material layer and the uncoated portion of the first electrode current collector, wherein the insulating coating layer is exposed to outside of the separator, wherein a lower end of the cutting line around the bent target area is spaced apart from an end portion of the insulating coating layer.

In another aspect, an electrode plate including the second electrode current collector and an active material layer formed on at least one surface of the second electrode current collector may be formed, wherein the electrode plate includes an insulating coating layer formed at a boundary between the active material layer and the uncoated portion of the second electrode current collector, wherein the insulating coating layer is exposed to outside of the separator, wherein a lower end of the cutting line around the bent target area is spaced apart from an end portion of the insulating coating layer.

A method of manufacturing an electrode assembly according to the present disclosure includes: a step (a) of preparing a first electrode current collector and a second electrode current collector each having a sheet shape and including an uncoated portion on a side in a longitudinal direction; a step (b) of stacking at least once the first electrode current collector, the second electrode current collector, and a separator so that the separator is located between the first electrode current collector and the second electrode current collector, and forming an electrode current collector-separator stack so that the uncoated portion of the first electrode current collector and the uncoated portion of the second electrode current collector are exposed in opposite directions in a longitudinal direction of the separator; a step (c) of forming a jelly-roll type electrode assembly by winding the electrode current collector-separator stack in one direction so that the uncoated portion of the first electrode current collector and the uncoated portion of the second electrode current collector are exposed in opposite directions in a winding axis direction; a step (d) of forming a cutting line in a longitudinal direction of the electrode assembly in at least one of the uncoated portion of the first electrode current collector and the uncoated portion of the second electrode current collector so the uncoated portion is divided into a remaining area remaining to protrude in the winding axis direction and a bent target area bent in a preset direction; and a step (e) of bending at least a part of an uncoated portion included in the bent target area to have a plurality of layers overlapping in a bending direction of a certain uncoated portion.

Preferably, a current collecting plate having a shape corresponding to a shape of the bent target area may be coupled to the uncoated portion of the bent target area.

Preferably, the current collecting plate may be welded to an uncoated portion bent area in the bent target area bent to have a plurality of overlapping layers.

Preferably, the cutting line may be formed by a cutter that ultrasonically vibrates in the winding axis direction of the electrode assembly.

Preferably, the certain uncoated portion may be bent along the cutting line.

According to an aspect, the bent target area may include a plurality of cutting lines, wherein the plurality of cutting lines are paired and each pair extends in a radial direction of the electrode assembly when viewed in the winding axis direction of the electrode assembly.

According to another aspect, the bent target area may include a plurality of cutting lines, wherein the plurality of cutting lines are paired and each pair extends radially outward from a core center of the electrode assembly when viewed in the winding axis direction of the electrode assembly.

According to another aspect, the bent target area may include a plurality of cutting lines, wherein each of the plurality of cutting lines has an arc shape curved toward a core center of the electrode assembly when viewed in the winding axis direction of the electrode assembly.

Preferably, in the step (e), at least a part of the uncoated portion included in the bent target area may be bent toward a core direction of the electrode assembly.

Preferably, in the step (e), at least a part of the uncoated portion included in the bent target area may be bent to have at least three layers overlapping in a radial direction of the electrode assembly.

Preferably, in the step (e), at least a part of the uncoated portion included in the bent target area may be bent to have at least four layers overlapping in a radial direction of the electrode assembly.

Preferably, in the step (e), at least a part of the uncoated portion included in the bent target area may be bent to have at least five layers overlapping in a radial direction of the electrode assembly.

A cylindrical battery cell includes: an electrode assembly having a jelly-roll type structure in which a first electrode current collector and a second electrode current collector each having a sheet shape and a separator located between the first electrode current collector and the second electrode current collector are wound in one direction, wherein at least one of the first electrode current collector and the second electrode current collector includes an uncoated portion exposed to outside of the separator in a longitudinal direction of the electrode assembly on a long side end portion, wherein a cutting line is formed in the longitudinal direction of the electrode assembly in at least one of the uncoated portion of the first electrode current collector and the uncoated portion of the second electrode current collector, wherein the uncoated portion in which the cutting line is formed is divided into a remaining area remaining to protrude in a winding axis direction with respect to the cutting line and a bent target area bent in a preset direction, wherein at least a part of an uncoated portion included in the bent target area is bent to have a plurality of layers overlapping in a bending direction of a certain uncoated portion; a cylindrical battery can in which the electrode assembly is accommodated and that is electrically connected to the second electrode current collector; a sealing body configured to seal an open end of the battery can; an external terminal electrically connected to the first electrode current collector and having a surface exposed to outside; and a current collecting plate welded to a bent surface of the uncoated portion and electrically connected to any one of the battery can and the external terminal.

The above technical objects may also be achieved by a battery pack including the cylindrical battery cell and a vehicle including the battery pack.

### Advantageous Effects

According to an aspect of the present disclosure, because a cutting line is formed in an uncoated portion corresponding to an edge of a bent target area by a cutter that ultrasonically vibrates in a winding axis direction of an electrode assembly and the uncoated portion of the bent target area is bent, the degree of flatness of the uncoated portion with respect to a bent surface may be increased and a phenomenon where the uncoated portion under the bent surface is irregularly bent may be reduced.

The present disclosure may have various other effects, which will be described in each embodiment or the description of effects which may be easily inferred by one of ordinary skill in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a plan view illustrating a structure of an electrode plate used to manufacture a conventional tab-less cylindrical battery cell.
FIG. 2 is a view illustrating a winding process of the electrode plate of the conventional tab-less cylindrical battery cell.
FIG. 3 is a view illustrating a process of welding a current collecting plate to a bent surface of an uncoated portion in the conventional tab-less cylindrical battery cell.
FIG. 4 is an enlarged photograph, illustrating, when an uncoated portion is bent toward a core in a radial direction by using a jig and a part of a bent portion is cut in a longitudinal direction of an electrode assembly, a bent shape of the uncoated portion.
FIG. 5 is a plan view illustrating a structure of an electrode plate according to an embodiment of the present disclosure.
FIG. 6 is a cross-sectional view, taken along a Y-axis, a jelly-roll type electrode assembly in which an electrode plate is applied to a first electrode current collector and a second electrode current collector according to an embodiment of the present disclosure.
FIG. 7 is a plan view illustrating a cutter used to form a cutting line in an uncoated portion according to an embodiment of the present disclosure.
FIG. 8 is a cross-sectional view taken along line A-A' of FIG. 7.
FIG. 9 is a view illustrating a configuration of an ultrasonic cutter according to an embodiment of the present disclosure.
FIGS. 10 through 12 are plan views illustrating cutters according to various modified examples of the present disclosure.
FIG. 13 is a perspective view illustrating a state after a cutting line is formed in an uncoated portion of an electrode assembly by using a cutter according to an embodiment of the present disclosure.
FIG. 14 is a plan view of FIG. 13.
FIG. 15 is a perspective view illustrating a state where an uncoated portion is bent along a cutting line in FIG. 13 and then a current collecting plate is coupled to an upper side of the bent uncoated portion.
FIG. 16 is a plan view of FIG. 15.
FIG. 17 is a plan view illustrating a state after a cutting line is formed in an uncoated portion of an electrode assembly by using a cutting according to another embodiment of the present disclosure.
FIG. 18 is a cross-sectional view, taken along a Y-axis, illustrating a cylindrical battery cell according to an embodiment of the present disclosure.
FIG. 19 is a cross-sectional view, taken along a Y-axis, illustrating a cylindrical battery cell according to another embodiment of the present disclosure.
FIG. 20 is a view illustrating a configuration of a battery pack according to an embodiment of the present disclosure.
FIG. 21 is a view for describing a vehicle including the battery pack of FIG. 20.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the present disclosure, so it should be understood that other equivalents and modifications could be made thereto without departing from the scope of the present disclosure.

In addition, in order to help the understanding of the present disclosure, the accompanying drawings are not drawn to scale, but dimensions of some components may be exaggerated. Also, the same reference signs may be assigned to the same components in different embodiments.

First, an electrode assembly according to an embodiment will be described. The electrode assembly may be a jelly-roll type electrode assembly having a structure in which a first electrode current collector and a second electrode current collector each having a sheet shape and a separator located between the first and second electrode current collectors are wound in one direction to form a winding central hole in a core.

Preferably, at least one of the first electrode current collector and the second electrode current collector includes an uncoated portion uncoated with an active material on a long side end portion in a winding direction. At least a part of the uncoated portion itself is used as an electrode tab.

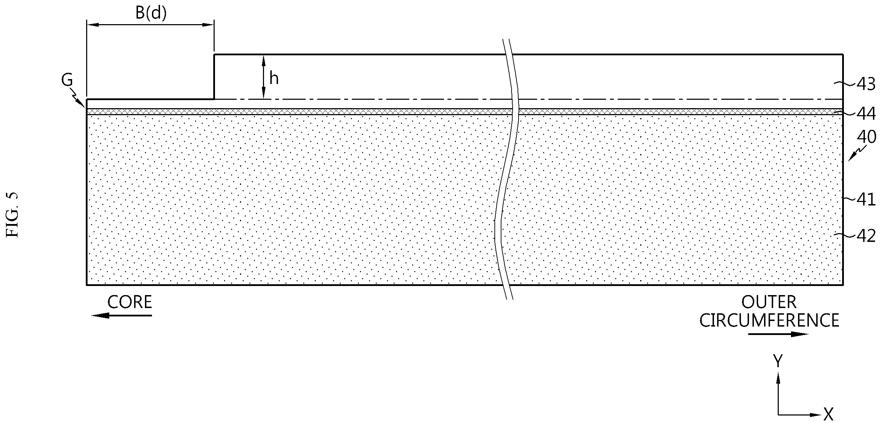

FIG. 5 is a plan view illustrating a structure of an electrode plate 40 according to an embodiment of the present disclosure.

Referring to FIG. 5, the electrode plate 40 includes an electrode current collector 41 formed of a metal foil and an active material layer 42. The metal foil includes a conductive metal. The metal foil may be aluminum or coper, and is appropriately selected according to polarity of the electrode plate 40. The active material layer 42 is formed on at least one surface of the electrode current collector 41, and the electrode plate 40 includes an uncoated portion 43 on a long end portion in a winding direction X. The uncoated portion 43 is a portion uncoated with an active material. An insulating coating layer 44 may be formed at a boundary between the active material layer 42 and the uncoated portion 43. At least a part of the insulating coating layer 44 is formed to overlap the boundary between the active material layer 42 and the uncoated portion 43. The insulating coating layer 44 may include a polymer resin, and may include an inorganic filler such as Al₂O₃. The polymer resin may have a porous structure. The polymer resin is not particularly limited as long as it is an insulating material. Examples of the polymer resin may include, but are not limited to, polyolefin, polyimide, polyethylene terephthalate, and polybutylene fluoride.

Preferably, a part of the uncoated portion 43 adjacent to a core side may be cut through a notching process. In this case, even when the uncoated portion 43 is bent toward a core, the core of an electrode assembly is not blocked by a bent portion of the uncoated portion 43. For reference, the core has a cavity formed by removing a bobbin used during winding of the electrode assembly. The cavity may be used as a path through which an electrolytic solution is injected or a path through which a welding jig is inserted. In the drawings, a dash-dotted line indicates a lowest position at which the uncoated portion 43 is bent. Bending of the uncoated portion 43 is performed at the dash-dotted line or a higher position.

A cutting portion B of the uncoated portion 43 forms a plurality of winding turns in a radial direction when the electrode plate 40 is wound. The plurality of winding turns have a certain width in the radial direction. Preferably, a width of the cutting portion B and a bending length h of the uncoated portion 43 may be adjusted so that the certain width is equal to or greater than the bending length h of the uncoated portion 43. Accordingly, even when the uncoated portion 43 is bent, the core of the electrode assembly is not blocked.

In order to prevent damage to the active material layer 42 and/or the insulating coating layer 44 when the cutting portion B of the uncoated portion 43 is formed, it is preferable to have a gap G between a cutting line and the insulating coating layer 44. It is preferable that the gap G ranges from 0.2 mm to 4 mm. When the gap G is adjusted within the numerical range, damage to the active material layer 42 and/or the insulating coating layer 44 due to a cutting tolerance when the uncoated portion 43 is cut may be prevented.

In a specific example, when the electrode plate 40 is used to manufacture an electrode assembly of a cylindrical battery cell having a form factor of 46800, the width d of the cutting portion B of the uncoated portion may be set to 180 mm to 350 mm according to a diameter of a core of the electrode assembly.

When the core of the electrode assembly is not used in an electrolyte injection process, a welding process, etc., the cutting portion B of the uncoated portion 43 may not be formed.

The electrode plate 40 of the above embodiment may be applied to a first electrode current collector and/or a second electrode current collector included in a jelly-roll type electrode assembly. Also, when the electrode structure of an embodiment is applied to any one of the first electrode current collector and the second electrode current collector, a conventional electrode plate structure (see FIG. 1) may be applied to the other. Also, electrode plate structures applied to the first electrode current collector and the second electrode current collector may not be the same but may be different from each other.

In the present disclosure, a positive electrode active material coated on the first electrode current collector and a negative electrode active material coated on the second electrode current collector may not be particularly limited as long as they are active materials known in the art.

In an example, the positive electrode active material may include an alkali metal compound expressed by a general chemical formula A[AₓM_{y]}O_{2+z} (A includes at least one of Li, Na, and K; M includes at least one element selected from Ni, Co, Mn, Ca, Mg, Al, Ti, Si, Fe, Mo, V, Zr, Zn, Cu, Al, Mo, Sc, Zr, Ru, and Cr; x ≥ 0, 1 ≤ x + y ≤2, -0.1 ≤ z ≤ 2; and stoichiometric coefficients x, y, and z are selected so that the compound maintains electrically neutral).

In another example, the positive electrode active material may be an alkali metal compound xLiM¹O₂₋(1-x)Li₂M²O₃ (M¹ includes at least one element having an average oxide state of 3; M² includes at least one element having an average oxidation state of 4; and 0 ≤ x≤ 1) disclosed in US 6,677,082, US 6,680,143, etc.

In another example, the positive electrode active material may be lithium metal phosphate expressed by a general chemical formula LiₐM¹ₓFe₁₋ₓM²_{y}P_{1-y}M³_{z}O_{4-z} (M¹ includes at least one element selected from Ti, Si, Mn, Co, Fe, V, Cr, Mo, Ni, Nd, Al, Mg, and Al; M² includes at least one element selected from Ti, Si, Mn, Co, Fe, V, Cr, Mo, Ni, Nd, Al, Mg, Al, As, Sb, Si, Ge, V, and S; M³ includes an element of a halogen group selectively containing F; 0 < a≤ 2, 0 ≤ x ≤ 1, 0 ≤ y < 1, 0 ≤ z < 1; and stoichiometric coefficients a, x, y, and z are selected so that the compound matains electrically neutral), or Li₃M₂(PO₄)₃ [M includes at least one element selected from Ti, Si, Mn, Fe, Co, V, Cr, Mo, Ni, Al, Mg, and Al].

Preferably, the positive electrode active material may include primary particles and/or secondary particles in which the primary particles are aggregated.

In an example, the negative electrode active material may use a carbon material, lithium metal or lithium metal compounds, silicon or silicon compounds, tin or tin compounds, etc. Metal oxide such as TiO₂ or SnO₂ having a potential of less than 2 V may be also used as the negative electrode active material. As the carbon material, low crystalline carbon and high crystalline carbon may be used.

A separator may include a porous polymer film, for example, made of a polyolefin-based polymer such as an ethylene homopolymer, a propylene homopolymer, an ethylene/butene copolymer, an ethylene/hexene copolymer, or an ethylene/methacrylate copolymer, in a single or stack structure thereof. In another example, the separator may be a common porous non-woven fabric, for example, a non-woven fabric made of glass fiber having a high melt point or polyethylene terephthalate fiber.

At least one surface of the separator may include a coating layer of inorganic particles. Otherwise, the separator itself may be made of a coating layer of inorganic particles. The particles included in the coating layer may be coupled to a binder so that an interstitial volume exists between adjacent particles.

The inorganic particles may include an inorganic material having a dielectric constant of 5 or more. In a non-limiting example, the inorganic particles may include at least one material selected from the group consisting of Pb(Zr,Ti)O₃ (PZT), Pb₁ₓLaₓZn_{y}Ti_{y}O₃ (PLZT), PB(Mg₃Nb_{2/3})O₃-PbTiO₃ (PMN-PT), BaTiO₃, hafnia (HfO₂), SrTiO₃, TiO₂, Al₂O₃, ZrO₂, SnO₂, CeO₂, MgO, CaO, ZnO, and Y₂O₃.

The electrode assembly according to an embodiment is a jelly-roll type electrode assembly 50 obtained by applying the electrode plate 40 of an embodiment to the first electrode current collector and the second electrode current collector.

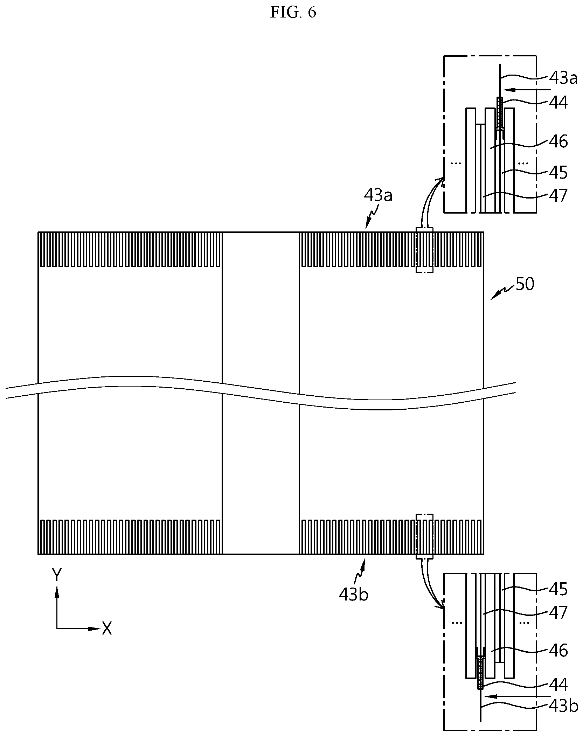

FIG. 6 is a cross-sectional view, taken along a Y-axis, illustrating the jelly-roll type electrode assembly 50 in which the electrode plate 40 is applied to a positive electrode plate and a negative electrode plate according to an embodiment of the present disclosure.

In a positive electrode plate 45, an active material layer may be formed on at least one surface of a first electrode current collector, and in a negative electrode plate 47, an active material layer may be formed on at least one surface of a second electrode current collector.

Referring to FIG. 6, the electrode assembly 50 may be manufactured by using a winding process described with reference to FIG. 2. An uncoated portion 43a protruding upward from the electrode assembly 50 extends from the positive electrode plate 45. An uncoated portion 43b protruding downward from the electrode assembly 50 extends from the negative electrode plate 47. A separator 46 is located between the positive electrode plate 45 and the negative electrode plate 47. A length of an active material coating area of the positive electrode plate 45 in the Y-axis may be less than a length of an active material coating area of the negative electrode plate 47 in the Y-axis. Accordingly, the active material coating area of the negative electrode plate 47 may extend longer than the active material coating area of the positive electrode plate 45 in the Y-axis.

Preferably, an insulating coating layer 44 formed at a boundary between the active material areas of the positive electrode plate 45 and the negative electrode plate 47 and the uncoated portions 43a, 43b may extend up to an end portion of the separator 46 or may be exposed to the outside beyond the end portion. When the insulating coating layer 44 is exposed to the outside of the separator 46, the insulating coating layer 44 may support bending points when the uncoated portions 43a, 43b are bent. When the bending points are supported, stress applied to the active material layer 42 and the separator 46 when the uncoated portions 43a, 43b are bent is reduced. Also, the insulating coating layer 44 may prevent a short circuit due to contact between the positive electrode plate 45 and the negative electrode plate 47. In this case, a bent target area D may have a shape protruding outward from the insulating coating layer 44.

The positive electrode plate 45 of the electrode plate 40 may include the first electrode current collector and the active material coating layer formed on at least one surface of the first electrode current collector, and a thickness of the first electrode current collector (the uncoated portion 43a) may range from 180 um to 220 um. The negative electrode plate 47 may include the second electrode current collector and the active material coating layer formed on at least one surface of the second electrode current collector, and a thickness of the second electrode current collector (the uncoated portion 43b) may range from 140 um to 180 um. The separator may be located between the positive electrode plate 45 and the negative electrode plate 47, and may have a thickness ranging from 8 um to 18 um.

In a winding structure of the positive electrode plate 45, an interval between the uncoated portions 43a located at adjacent winding turns may range from 350 um to 380 um. Also, in a winding structure of the negative electrode plate 47, an interval between the uncoated portions 43b located at adjacent winding turns may range from 350 um to 380 um.

In the electrode assembly 50, the number of winding turns of the positive electrode plate 45 may vary according to a form factor of the cylindrical battery cell and may range from 48 to 56. The number of winding turns of the negative electrode plate 47 may also vary according to the form factor of the cylindrical battery cell and may range from 48 to 56.

The uncoated portions 43a, 43b are longer than uncoated portions applied to a design of the small cylindrical battery cell. Accordingly, the uncoated portions 43a, 43b may be 6 mm or more, optionally 7 mm or more, optionally 8 mm or more, optionally 9 mm or more, optionally 10 mm or more, optionally 11 mm or more, and optionally 12 mm or more.

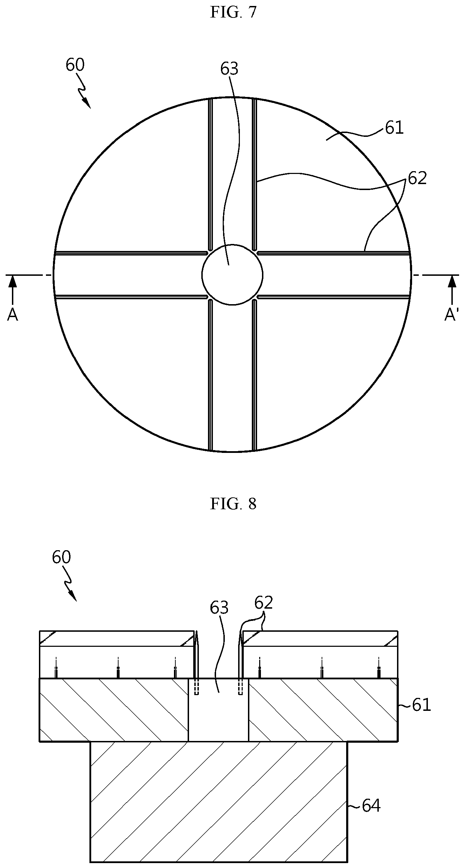

FIGS. 7 and 8 are views illustrating a structure of a cutter 60 used to form a cutting line 100 in the uncoated portions 43a, 43b according to an embodiment of the present disclosure. FIG. 7 is a plan view illustrating the cutter 60. FIG. 8 is a cross-sectional view taken along line A-A' of FIG. 7.

Referring to FIGS. 7 and 8, the cutter 60 according to an embodiment may include a cutter body 61 and a plurality of cutter knives 62, and a recess groove 63 may be provided in the center of the cutter body 61. Preferably, the cutter body 61 may be coupled to a horn 64 of an ultrasonic cutter. The ultrasonic cutter will be described below.

Preferably, the cutter body 61 is formed of a metal material, for example, an aluminum alloy, a titanium alloy, or carbon steel. The cutter knife 62 is formed of a metal material, for example, carbon steel, alloy steel, high-speed steel, cast alloy, cermet, cubic boron nitride, ceramic, or diamond.

Lower end portions of the plurality of cutter knives 62 may be embedded in the cutter body 61. Alternatively, a lower end portion of each cutter knife 62 may be inserted into a groove formed in the cutter body 61 and then may be welded to the cutter body 61.

Each of the cutter knives 62 has a strip shape extending outward from a central portion of the cutter body 61 and vertically upright with respect to a surface of the cutter body 61.

Preferably, the plurality of cutter knives 62 may be paired and each pair may extend in parallel outward from the central portion of the cutter body 61. An area between two cutter knives 62 that extend in parallel corresponds to the bent target area D of the uncoated portions 43a, 43b.

The plurality of cutter knives 62 may be paired and may extend radially with respect to the center of the cutter body 61, and angles between pairs of cutter knives 62 may be substantially the same.

In an example, the number of cutter knives 62 may be 8. In this case, pairs of cutter knives 62 extending radially form an angle of 90° therebetween. As described below, radial extension shapes of the pairs of cutter knives 62 may be modified in various ways.

In an embodiment of the present disclosure, the cutter 60 may be included in an ultrasonic cutter.

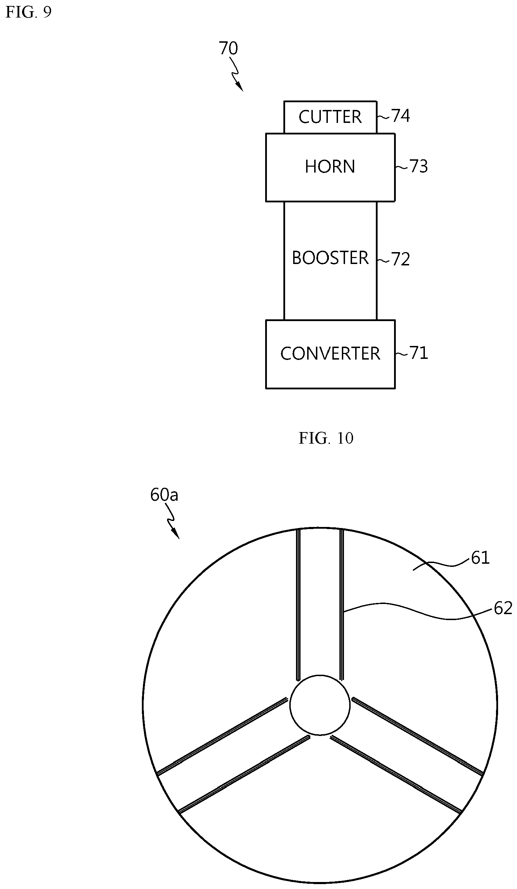

FIG. 9 is a view illustrating a configuration of an ultrasonic cutter 70 according to an embodiment of the present disclosure.

Referring to FIG. 9, the ultrasonic cutter 70 according to an embodiment may include a converter 71, a booster 72, a horn 73, and a cutter 74.

The converter 71 generates ultrasonic vibration. The converter 71 may include a ceramic vibrator to generate ultrasonic waves. The booster 72 amplifies the ultrasonic waves generated by the converter 71 and transmits the ultrasonic waves to the horn 73. The horn 73 transmits the ultrasonic vibration amplified by the booster 72 to the cutter 74. Preferably, the cutter 74 may be the cutter 60. In this case, a lower portion of the cutter body 61 of the cutter 60 may be coupled to the horn 73 by using a method such as bolt/nut fastening, riveting, or welding. When the horn 73 to which the cutter 74 is coupled contacts a work piece and is moved in a cutting direction, the work piece is cut by the cutter 74 that ultrasonically vibrates.

Although not shown, the ultrasonic cutter 70 is a mechanical and/or electronic mechanism for linear movement and/or rotational movement of the horn 73, and the ultrasonic cutter 70 may further include a station to which the work piece is fixed; and/or a servo motor and/or a linear motor and/or an air cylinder supporting linear movement and/or rotational movement of the horn 73; and/or a driving source thereof; and/or an electronic control device thereof.

The above-described configuration of the ultrasonic cutter 70 is widely known in the art, and it is apparent to one of ordinary skill in the art that various components required for linear movement and/or rotational movement of the horn 73 may be additionally coupled to the ultrasonic cutter 70.

It will be understood by one of ordinary skill in the art that a structure of the cutter 60 may be modified in various ways.

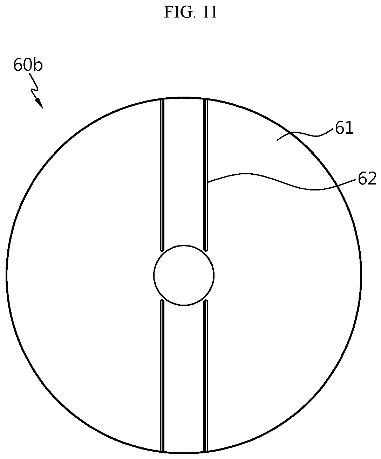

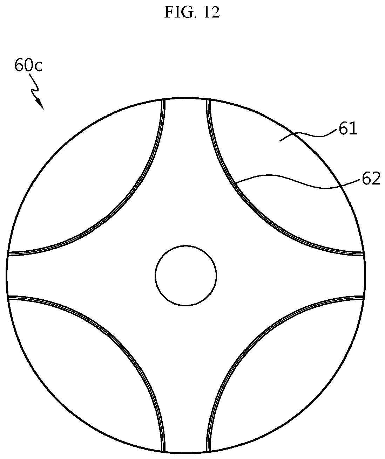

FIGS. 10 through 12 are plan views illustrating cutters 60a, 60b, 60c according to various modified examples of the present disclosure.

Referring to FIGS. 10 through 12, the cutter 60a has a structure in which pairs of cutter knives 62 radially extend to form an angle of 120° therebetween. Also, the cutter 690b has a structure in which pairs of cutter knives 62 radially extend to form an angle of 180° therebetween.

In another modified example, the cutter 60c may include cutter knifes 62 having arc shapes recessed toward a central portion of the cutter body 61. The arc shapes of the cutter knifes 62 may be point symmetric, left-right symmetric, or vertical symmetric with respect to the center of the cutter body 61. Even when the cutter knives 62 have the arc shapes, the cutter knives 62 radially extend with respect to the center of the cutter body 61. The number of cutter knives 62 having the arc shapes is not limited to 4, and may be adjusted to 2 or 3. In this case, it is preferable that the cutter knives 62 are arranged at equal intervals in a circumferential direction of the cutter body 61.

Cross-sectional structures of the cutter knives 62 included in the cutters 60a, 60b, 60c of various embodiments may be substantially the same as that shown in FIG. 8, and the cutters 60a, 60b, 60c may be used as the cutter 74 of the ultrasonic cutter 70. In this case, the cutter body 61 may be coupled to the horn 73 of the ultrasonic cutter 70.

According to an embodiment of the present disclosure, after the cutting line 100 is formed in a longitudinal direction of the electrode assembly by any of the cutters 60, 60a, 60b, 60c, the uncoated portions 43a, 43b of the electrode assembly 50 may be divided into a remaining area R remaining to protrude in a winding axis direction with respect to the cutting line 100 and a bent target area D bent in a preset direction.

Preferably, a bending direction of the certain uncoated portions 43a, 43b may be a radial direction of the electrode assembly 50. Also, preferably, a bending direction of the certain uncoated portions 43a, 43b may be a core direction of the electrode assembly 50.

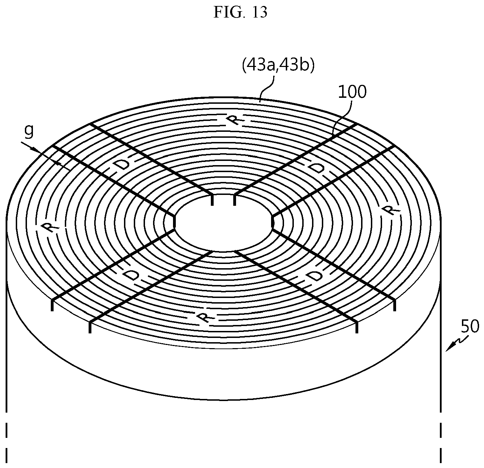

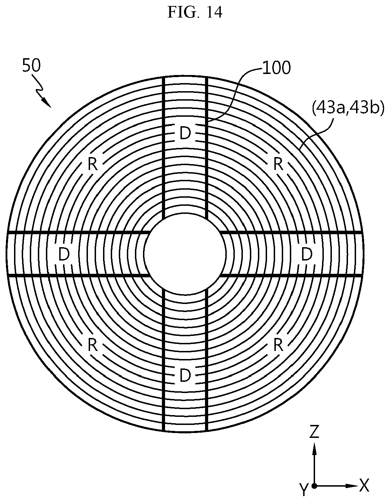

FIG. 13 is a perspective view illustrating a state after the cutting line 100 is formed in the uncoated portions 43a. 43b of the electrode assembly 50 by using the cutter 60 according to an embodiment of the present disclosure. FIG. 14 is a plan view of FIG. 13.

Referring to FIGS. 13 and 14, the cutting line 100 is formed in a longitudinal direction of the electrode assembly in at least one of the uncoated portion 43a of the first electrode current collector and the uncoated portion 43b of the second electrode current collector, and the uncoated portions 43a, 43b are divided into the remaining area R remaining to protrude in a winding axis direction with respect to the cutting line 100 and the bent target area D bent in a preset direction. That is, while the uncoated portions 43a, 743b in the remaining area R are maintained unbent, the uncoated portions 43a, 43b in the bent target area D are bent in the preset direction.

Preferably, the uncoated portions 43a, 43b are cut in a winding axis direction Y of the electrode assembly 50 to form the cutting line 100.

Preferably, the cutting line 100 may be formed by the cutter 60 that ultrasonically vibrates in the winding axis direction of the electrode assembly 50.

First, while the cutter 60 ultrasonically vibrates, the cutter knife 62 faces a top surface of the electrode assembly 50 and the cutter 60 is moved along the winding axis direction (Y-axis, ground direction) to cut upper portions of the uncoated portions 43a, 43b to a certain depth and form the cutting line 100 at an edge of the bent target area D. The certain uncoated portions 43a, 43b may be bent along the cutting line 100.

The bent target area D corresponds to an area bent in multiple layers for welding to a current collecting plate 80. The cutting line 100 corresponds to an area where upper portions of the uncoated portions 43a, 43b are cut into line slits. Preferably, a cutting depth may range from 2 mm to 10 mm, and it is preferable that a lowermost point at which vertical cutting using the cutter 60 ends is a position (point indicated by an arrow of FIG. 6) higher than an end portion of the insulating coating layer 44 exposed to the outside of the separator 46.

The cutting line 100 may be formed through at least one cutting. For example, referring to FIG. 13, the cutting line 100 may be formed by cutting once by using the cutter having a cross shape of FIG. 7. Alternatively, although not shown, the cutting line 100 may be formed by cutting once in each of horizontal and vertical directions by using a pair of vertical line cutters. Alternatively, although not shown, the cutting line 100 may be formed by cutting eight times by using one cutter, or may be formed in another way.

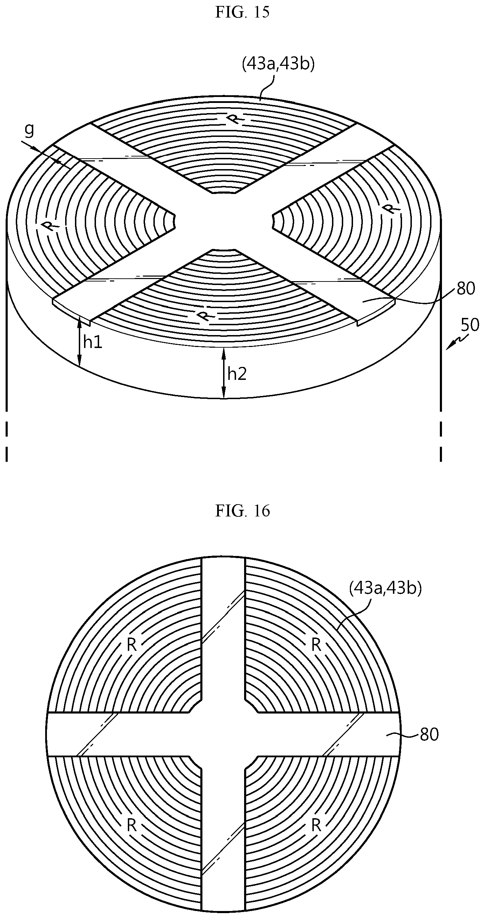

FIG. 15 is a perspective view illustrating a state where the uncoated portions 43a, 43b are bent along the cutting line 100 in FIG. 13 and then a current collecting plate is coupled to the top of the bent uncoated portions 43a, 43b. FIG. 16 is a plan view of FIG. 15.

When the uncoated portions 43a, 43b in the bent target area D in FIG. 13 are bent, a groove may be formed in a bending direction, and the current collecting plate 80 having a shape corresponding to a shape of the groove of the bent target area D may be coupled to the uncoated portions 43a, 43b in the bent target area D as shown in FIGS. 15 and 16. In this case, the current collecting plate 80 may be welded to the uncoated portions 43a, 43b of the bent target area D. However, a coupling method of the current collecting plate 80 is not limited thereto.

When the cutting line 100 is formed in the uncoated portions 43a, 43b as described above, the degree of flatness when the uncoated portions 43a, 43b are bent along the bent target area D may be increased, and thus, a bent shape of the uncoated portions 43a, 43b may be uniform. When the bent shape of the uncoated portions 43a, 43b is uniform, weldability may be improved.

Referring to FIG. 15, a total height h1 of the current collecting plate 80 and the uncoated portions 43a, 43b after the current collecting plate 80 is coupled to the uncoated portions 43a, 43b of the bent target area D may correspond to a height h2 of the uncoated portions 43a, 43b remaining to protrude in a winding axis direction of the remaining area R. For example, the total height h1 of the current collecting plate 80 of the bent target area D and the uncoated portions 43a, 43b may be similar or equal to the height h2 of the uncoated portions 43a, 43b protruding in the remaining area R.

There may be a gap g between any one uncoated portion of the uncoated portions 43a, 43b of the remaining area R and the other uncoated portion. An electrolytic solution may flow through the gap. Because the uncoated portions 43a, 43b of the bent target area D are bent in a preset direction and there is little gap between any one uncoated portion and the other uncoated portion of the bent target area D, it is difficult for an electrolytic solution to flow. However, because the uncoated portions 43a, 43b of the remaining area R are not bent and are vertically oriented, there is a gap between any one uncoated portion of the uncoated portions 43a, 43b of the remaining area R and the other uncoated portion, and because an electrolytic solution flows through the gap, wetting of the electrolytic solution is improved.

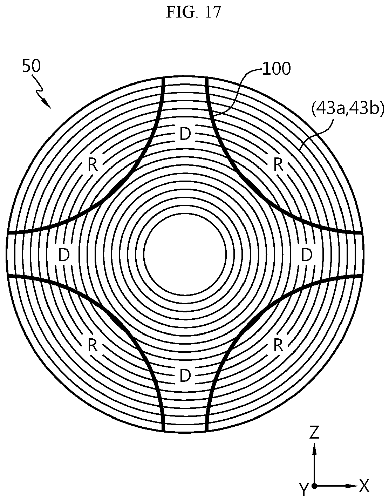

FIG. 17 is a view illustrating a state after the cutting line 100 is formed in the uncoated portions 43a, 43b of the electrode assembly 50 by using the cutter 60c according to another embodiment of the present disclosure.

Referring to FIG. 17, first, while the cutter 60c ultrasonically vibrates, the cutter knife 62 faces a top surface of the electrode assembly 50 and the cutter 60c is moved in the winding axis direction (Y-axis, ground direction) to cut upper portions of the uncoated portions 43a, 43b to a certain depth and form the cutting line 100 at an edge of the bent target area D. The cutting line 100 has an arc shape curved toward a core center of the electrode assembly 50. Accordingly, the bent target area D has a cross shape with an edge having an arc shape.

The bent target area D corresponds to an area bent in multiple layers for welding to the current collecting plate. 80. The cutting line 100 corresponds to an area where upper portions of the uncoated portions 43a, 43b are cut like, for example, knife marks. Preferably, a cutting depth may range from 2 mm to 10 mm, and it is preferable that a lowermost point at which vertical cutting using the cutter 60c ends is a position (point indicated by an arrow of FIG. 6) higher than an end portion of the insulating coating layer 44 exposed to the outside of the separator 46.

Preferably, as shown in FIG. 5, because a height of the uncoated portion 43 near the core of the electrode assembly 50 is lower than that of the uncoated portion 43 in other portions, the bent target area D may not be formed. The bent target area D may have any of various shapes. In an example, a shape of the bent target area D may extend in a radial direction when viewed in the winding axis direction of the electrode assembly 50. In another example, a shape of the bent target area D may be a shape radially extending outward from the core center of the electrode assembly 50 when viewed in the winding axis direction of the electrode assembly 50. In another example, a shape of the bent target area D may be a shape radially extending outward in two or more directions from the core center of the electrode assembly 50 when viewed in the winding axis direction of the electrode assembly 50. In another example, a shape of the bent target area D may be a cross shape extending outward from the core center of the electrode assembly 50 when viewed in the winding axis direction of the electrode assembly 50. In another example, a shape of the bent target area D may be a shape radially extending outward from the core center of the electrode assembly 50 when viewed in the winding axis direction of the electrode assembly 50, and the cutting line 100 may have an arc shape curved toward the core of the electrode assembly 50.

Referring back to FIG. 13, according to another aspect of the present disclosure, the bent target area D formed by cutting the uncoated portions 43a, 43b of the electrode assembly 50 along the cutting line 100 may be bent in a bending direction of the certain uncoated portions 43a, 43b.

Preferably, the bending direction of the certain uncoated portions 43a, 43b is a radial direction of the electrode assembly 50. More preferably, the bent target area D may be bent in the radial direction of the electrode assembly 50. More preferably, the bent target area D may be bent from an outer portion of the electrode assembly 50 toward the core.

Preferably, the uncoated portions 43a, 43b included in the bent target area D may bent in the radial direction of the electrode assembly 50, preferably from the outer portion toward the core.

Preferably, a length of the bent uncoated portions may be adjusted to range from 2 mm to 10 mm, so that at least 3, or at least 4, or at least 5 layers of the bent uncoated portions in a bending direction overlap in the winding axis direction (Y-axis) of the electrode assembly 50.

The bent target area D radially extends in the bending direction. Also, uncoated portions of the bent target area D have a narrow width. Accordingly, when the uncoated portions of the bent target area D are bent in a radial direction of the electrode assembly A, bending is uniformly performed. Also, because the bent uncoated portions have a narrow width, the degree of flatness of a bent surface is increased as the uncoated portions overlap in multiple layers. When the current collecting plate 80 is welded to the bent surface having the increased degree of flatness, welding power may be increased, welding strength may be sufficiently increased, and resistance characteristics of a welding interface may be improved.

The electrode assembly 50 according to an embodiment of the present disclosure may be applied to the jelly-roll type cylindrical battery cell.

Preferably, the cylindrical battery cell may be, for example, a cylindrical battery cell in which a form factor ratio (defined as a value obtained by dividing a diameter of the cylindrical battery cell by a height, that is, a ratio between a height H and a diameter Φ) is greater than about 0.4.

The term "form factor" used herein refers to a value indicating a diameter and a height of the cylindrical battery cell. The cylindrical battery cell according to an embodiment of the present disclosure may be, for example, a 46110 cell, a 48750 cell, a 48110 cell, a 48800 cell, or a 46800 cell. In the numerical value indicating the form factor, first two numbers indicate a diameter of a cell, next two numbers indicate a height of the cell, and a last number 0 indicates that a cross-section of the cell is circular. When a height of a cell exceeds 100 mm, three digits are required to indicate the height, and thus, the last digit 0 may be omitted.

When an electrode assembly having a tab-less structure is applied to the cylindrical battery cell in which a form factor ratio exceeds 0.4, stress applied in a radial direction when an uncoated portion is bent is large and the uncoated portion is easily torn. Also, in order to ensure sufficient welding strength and reduce resistance when the current collecting plate 80 is welded to a bent surface of the uncoated portion, the number of overlapping layers of the uncoated portions should be sufficiently increased. Such a requirement may be achieved by an electrode plate and an electrode assembly according to embodiments (modified examples) of the present disclosure.

The vehicle 900 according to an embodiment of the present disclosure may be a cylindrical battery cell having a substantially cylindrical shape, whose diameter is about 46 mm, height is about 110 mm, and form factor ratio is 0.418.

The vehicle 900 according to another embodiment may be a cylindrical battery cell having a substantially cylindrical shape, whose diameter is about 48 mm, height is about 75 mm, and form factor ratio is 0.640.

The vehicle 900 according to another embodiment may be a cylindrical battery cell having a substantially cylindrical shape, whose diameter is about 48 mm, height is about 110 mm, and form factor ratio is 0.418.

The vehicle 900 according to another embodiment may be a cylindrical battery cell having a substantially cylindrical shape, whose diameter is about 48 mm, height is about 80 mm, and form factor ratio is 0.600.

The vehicle 900 according to another embodiment may be a cylindrical battery cell having a substantially cylindrical shape, whose diameter is about 46 mm, height is about 80 mm, and form factor ratio is 0.575.

In the related art, vehicles 900 having a form factor ratio of about 0.4 or less have been used. That is, in the related art, for example, a 18650 cell, a 21700 cell, etc. have been used. The 18650 cell has a diameter of about 18 mm, a height of about 65 mm, and a form factor ratio of 0.277. The 21700 cell has a diameter of about 21 mm, a height of about 70 mm, and a form factor ratio of 0.300.

The cylindrical battery cell according to an embodiment of the present disclosure will be described in detail.

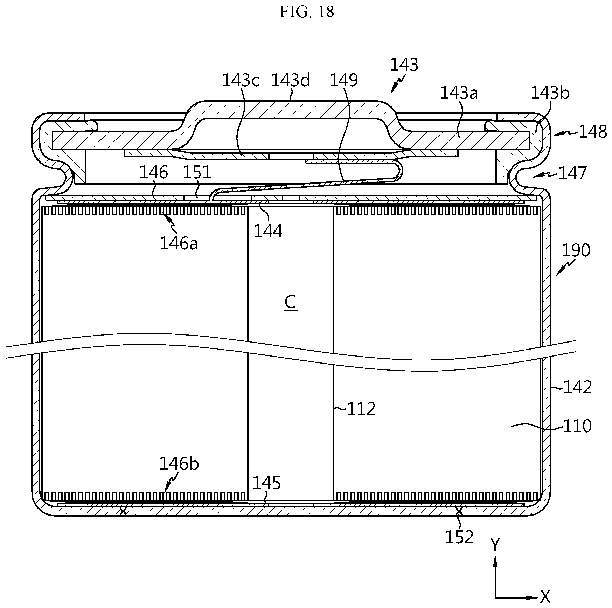

FIG. 18 is a cross-sectional view, taken along the Y-axis, illustrating a cylindrical battery cell 190 according to an embodiment of the present disclosure.

Referring to FIG. 18, the cylindrical battery cell 190 according to an embodiment of the present disclosure includes an electrode assembly including a first electrode current collector, a separator, and a second electrode current collector wound in a j elly-roll shape, a battery can 142 in which the electrode assembly 110 is accommodated, and a sealing body 143 for sealing an open end portion of the battery can 142. The electrode assembly 110 has a structure of the above embodiment.

The battery can 142 is a cylindrical container having an upper opening portion. The battery can 142 is formed of a conductive metal material such as aluminum, steel, or stainless steel. The electrode assembly and an electrolyte are accommodated in an inner space of the battery can 142 through the upper opening portion. A Ni coating layer may be formed on an outer surface and/or an inner surface of the battery can 142. The battery can 142 is electrically connected to the second electrode current collector.

The electrolyte may be a salt having a structure such as A⁺B⁻. Here, A⁺ includes an alkali metal cation such as Li⁺, Na⁺, or K⁺ or a combination thereof. B⁻ contains one or more anions selected from the group consisting of F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, BF₂C₂O₄⁻, BC₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻.

The electrolyte may also be dissolved in an organic solvent. Examples of the organic solvent may include propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), γ-butyrolactone, and a mixture thereof.

The electrode assembly 110 may have a jelly-roll shape. As shown in FIG. 2, the electrode assembly 110 may be manufactured by sequentially stacking a lower separator, the first electrode current collector, an upper separator, and the second electrode current collector at least once to form an electrode plate-separator stack and winding the electrode plate-separator stack with respect to a winding center C.

An uncoated portion 146a of the first electrode current collector and an uncoated portion 146b of the second electrode current collector respectively protrude from an upper portion and a lower portion of the electrode assembly 110.

The sealing body 143 seals an open end of the battery can 142, and includes a cap plate 143a, a first gasket 143b providing airtightness between the cap plate 143a and the battery can 142 and having insulation, and a connection plate 143c electrically and mechanically coupled to the cap plate 143.

The cap plate 143a is a component formed of a conductive metal material, and covers the upper opening portion of the battery can 142. The cap plate 143a is electrically connected to the uncoated portion 146a of the first electrode current collector, and is electrically insulated from the battery can 142 through the first gasket 143b. Accordingly, the cap plate 143a may function as a first electrode terminal of the cylindrical battery cell 140.

The cap plate 143a is seated on a beading portion 147 formed on the battery can 1472, and is fixed by a crimping portion 148. The first gasket 143b may be located between the cap plate 143a and the crimping portion 148 to ensure airtightness of the battery can 142 and electrical insulation between the battery can 142 and the cap plate 143a. The cap plate 143a may include a protrusion 143d protruding upward from a central portion thereof.

The battery can 142 is electrically connected to the uncoated portion 146b of the second electrode current collector. Accordingly, the battery can 142 has the same polarity as that of the second electrode current collector.

The battery can 142 includes the beading portion 147 and the crimping portion 148 at an upper end. The beading portion 147 is formed by press-fitting an outer circumferential surface of the battery can 142. The beading portion 147 may prevent the electrode assembly 110 accommodated in the battery can 142 from escaping through the upper opening portion of the battery can 142, and may function as a support on which the sealing body 143 is seated.

The crimping portion 148 is formed on an upper portion of the beading portion 147. The crimping portion 148 extends and is bent to surround an outer circumferential surface of the cap plate 143a located on the beading portion 147 and a part of a top surface of the cap plate 143a.

The cylindrical battery cell 190 may further include a first current collecting plate 144 and/or a second current collecting plate 145 and/or an insulator 146.

The first current collecting plate 144 is coupled to the upper portion of the electrode assembly 110. The first current collecting plate 144 is formed of a conductive metal material such as aluminum, copper, or nickel, and is electrically connected to a bent surface formed when the uncoated portion 146a included in the bent target area D of the first electrode current collector is bent in a radial direction of the electrode assembly 110, preferably toward the core center C. A lead 149 may be connected to the first current collecting plate 144. The lead 149 may extend upward from the electrode assembly 110 and may be coupled to the connection plate 143c, or may be directly coupled to a bottom surface of the cap plate 143a. The lead 149 and another component may be coupled to each other through welding.

Preferably, the first current collecting plate 144 may be integrally formed with the lead 149. In this case, the lead 149 may have a long plate shape extending outward from a central portion of the first current collecting plate 144.

The bent surface of the uncoated portion 146a and the first current collecting plate 144 may be coupled to each other by using, for example, laser welding. The laser welding may be performed by partially melting a current collecting plate base material. The laser welding may be replaced by resistance welding, ultrasonic welding, or spot welding.

The second current collecting plate 145 may be coupled to a bottom surface of the electrode assembly 110. A surface of the second current collecting plate 145 may be coupled by using welding to a bent surface formed when the uncoated portion 146b of the second electrode current collector included in the bent target area D protruding downward from the electrode assembly 110 is bent in the radial direction of the electrode assembly 110, preferably toward the core center C, and the other surface of the second current collecting plate 145 may be coupled by using welding on an inner bottom surface of the battery can 142. A coupling structure between the second current collecting plate 145 and the uncoated portion 146b of the second electrode current collector may be substantially the same as a coupling structure between the first current collecting plate 144 and the uncoated portion 146a of the first electrode current collector.

The insulator 146 may cover the first current collecting plate 144. The insulator 146 on a top surface of the first current collecting plate 144 may cover the first current collecting plate 144, to prevent direct contact between the first current collecting plate 144 and an inner circumferential surface of the battery can 142.

The insulator 146 has a lead hole 151 through which the lead 149 extending upward from the first current collecting plate 144 is drawn out. The lead 149 is drawn out upward through the lead hole 151 and is coupled to a bottom surface of the connection plate 143c or a bottom surface of the cap plate 143a.

A circumferential edge portion of the insulator 146 may be located between the first current collecting plate 144 and the beading portion 147, to fix a combination of the electrode assembly 110 and the first current collecting plate 144. Accordingly, the movement of the combination of the electrode assembly 110 and the first current collecting plate 144 in a height direction of the battery cell 190 is restricted, thereby improving the assembly stability of the battery cell 190.

The insulator 146 may be formed of an insulating polymer resin. In an example, the insulator 146 may be formed of polyethylene, polypropylene, polyimide, or polybutylene terephthalate.

The battery can 142 may further include a venting portion 152 formed in a bottom surface thereof. The venting portion 152 corresponds to an area having a smaller thickness than a peripheral area of the bottom surface of the battery can 142. The venting portion 152 is structurally weak when compared to the peripheral area. Accordingly, when abnormality occurs in the cylindrical battery cell 190 and internal pressure increases to a certain level or more, the venting portion 152 may be ruptured and gas generated in the battery can 142 may be discharged to the outside. The venting portion 152 may be a notch groove formed in a top surface and/or a bottom surface of the bottom of the battery can 142. When the notch groove is formed in both the top surface and the bottom surface of the bottom of the battery can 142, it is preferable that positions of the notch grooves correspond to each other.

The venting portion 152 may be continuously or discontinuously formed in a circular shape in the bottom surface of the battery can 142. In a modified example, the venting portion 152 may be formed in a linear pattern or other patterns.

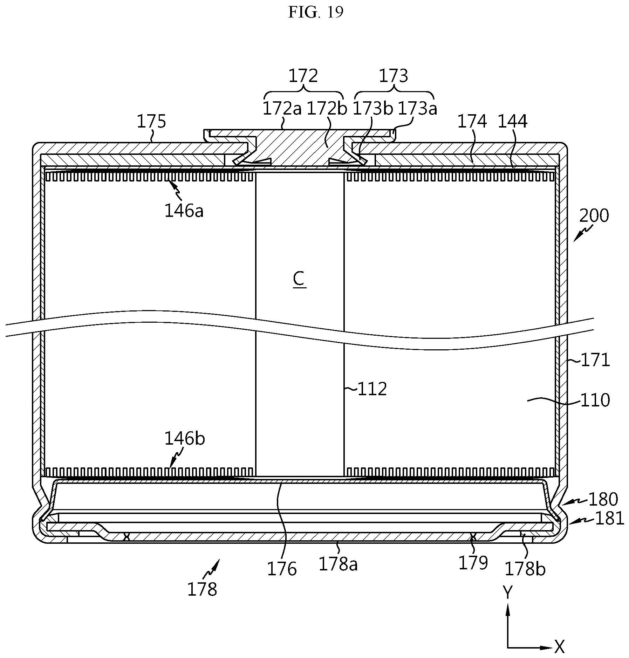

FIG. 19 is a cross-sectional view, taken along the Y-axis, illustrating a cylindrical battery cell 200 according to another embodiment of the present disclosure.

Referring to FIG. 19, when the cylindrical battery cell 200 is compared with the cylindrical battery cell 190 of FIG. 18, a structure of an electrode assembly is substantially the same, and a structure other than the electrode assembly is different.

In detail, the cylindrical battery cell 200 includes a battery can 171 that is electrically connected to a first electrode current collector and through which a rivet terminal 172 that is an external terminal whose surface is exposed to the outside passes. The rivet terminal 172 is provided in a closed surface (top surface in FIG. 19) of the battery can 171. The rivet terminal 172 is riveted into a through-hole of the battery can 171 with a second gasket 173 having insulation therebetween. The rivet terminal 172 is exposed to the outside in a direction opposite to the direction of gravity.

The rivet terminal 172 includes a terminal exposed portion 172a and a terminal insertion portion 172b. The terminal exposed portion 172a is exposed to the outside of the closed surface of the battery can 171. The terminal exposed portion 172a may be located at a substantially central portion of the closed surface of the battery can 171. A maximum diameter of the terminal exposed portion 172a may be greater than a maximum diameter of the through-hole formed in the battery can 171.

The terminal insertion portion 172b may pass through the substantially central portion of the closed surface of the battery can 171 and may be electrically connected to the uncoated portion 146a of the first electrode current collector. A portion electrically connected to the terminal insertion portion 172b is a central portion of a bent surface formed when the uncoated portion 146a of the first electrode current collector included in the bent target area D protruding upward from the electrode assembly 110 is bent.

A lower surface of the terminal insertion portion 172b may be substantially flat and may be welded to a central portion of the first current collecting plate 144 connected to the uncoated portion 146a of the first electrode current collector. An insulating cap 174 formed of an insulating material may be located between the first current collecting plate 144 and an inner surface of the battery can 171. The insulating cap 174 covers an upper portion of the first current collecting plate 144 and an upper edge portion of the electrode assembly 110. Accordingly, a shirt circuit occurring when the uncoated portion 146a of the electrode assembly 110 contacts the inner surface of the battery can 171 having a different polarity may be prevented. Preferably, the terminal insertion portion 172b of the rivet terminal 172 may pass through the insulating cap 174 and may be welded to the first current collecting plate 144.

The terminal insertion portion 172b may be riveted to the inner surface of the battery can 171. That is, an edge of an end portion of the terminal insertion portion 172b may be pressed by a caulking jig to be bent toward the inner surface of the battery can 171. A maximum diameter of the end portion of the terminal insertion portion 172b may be greater than a maximum diameter of the through-hole of the battery can 171.

The second gasket 173 is located between the battery can 171 and the rivet terminal 172 and prevents electrical contact between the battery can 171 and the rivet terminal 172 having opposite polarities. Accordingly, the top surface of the battery can 171 having a substantially flat shape may function as a second electrode terminal of the cylindrical battery cell 200.

The second gasket 173 includes a gasket exposed portion 173a and a gasket insertion portion 173b. The gasket exposed portion 173a is located between the terminal exposed portion 172a of the rivet terminal 1721 and the battery can 171. The gasket insertion portion 173b is located between the terminal insertion portion 172b of the rivet terminal 172 and the battery can 171. The gasket insertion portion 173b may be deformed during riveting of the terminal insertion portion 172b and may be closely attached to the inner surface of the battery can 171. The second gasket 173 may be formed of, for example, an insulating polymer resin.

The gasket exposed portion 173a of the second gasket 173 may extend to cover an outer circumferential surface of the terminal exposed portion 172a of the rivet terminal 172. When the second gasket 173 covers an outer circumferential surface of the rivet terminal 172, a short circuit occurring in a process of coupling an electrical connection component such as a bus bar to the top surface of the battery can 171 and/or the rivet terminal 172 may be prevented. Although not shown in FIG. 19, the gasket exposed portion 173a may extend to cover a part of a top surface as well as the outer circumferential surface of the terminal exposed portion 1721a.

When the second gasket 173 is formed of a polymer resin, the second gasket 173 may be coupled to the battery can 171 and the rivet terminal 172 by using thermal fusion. In this case, airtightness at a coupling interface between the second gasket 173 and the rivet terminal 172 and a coupling interface between the second gasket 173 and the battery can 171 may be enhanced. When the gasket exposed portion 173a of the second gasket 173 extends up to the top surface of the terminal exposed portion 172a, the rivet terminal 172 may be integrally coupled to the second gasket 173 through insert injection.

A portion 175 other than the rivet terminal 172 and the second gasket 173 in the top surface of the battery can 171 corresponds to a second electrode terminal having a polarity opposite to that of the rivet terminal 172.

A second current collecting plate 176 is coupled to a lower portion of the electrode assembly 110. The second current collecting plate 176 is formed of a conductive metal material such as aluminum, steel, copper, or nickel, and is electrically connected to the uncoated portion 146b of the second electrode current collector.

Preferably, the second current collecting plate 176 is electrically connected to the battery can 171. To this end, at least a part of an edge portion of the second current collecting plate 176 may be located and fixed between the inner surface of the battery can 171 and a first gasket 178b. In an example, at least a part of the edge portion of the second current collecting plate 176 may be fixed to a beading portion 180 by using laser welding or resistance welding while being supported on a lower surface of the beading portion 180 formed on a lower end of the battery can 171. In a modified example, at least a part of the edge portion of the second current collecting plate 176 may be directly welded to an inner wall surface of the battery can 171.

Preferably, a bent surface of the uncoated portion 146b and the second current collecting plate 176 may be coupled to each other by using welding, for example, laser welding, resistance welding, ultrasonic welding, or spot welding.

A sealing body 178 that seals a lower open end of the battery can 171 includes a cap plate 178a and the first gasket 178b. The first gasket 178b electrically separates the cap plate 178a from the battery can 171. A crimping portion 181 fixes an edge of the cap plate 178a and the first gasket 178b together. A venting portion 179 is provided in the cap plate 178a. A configuration of the venting portion 179 is substantially the same as that of the above embodiment.

Preferably, the cap plate 178a is formed of a conductive metal material. However, because the first gasket 178b is located between the cap plate 178a and the battery can 171, the cap plate 178a does not have an electrical polarity. The sealing body 178 is configured to seal the lower open end of the battery can 171 and discharge gas when internal pressure of the battery cell 170 is increased to a threshold value or more. The cap plate 178a may include the venting portion 179 at an edge of a flat portion. A configuration of the venting portion 179 is substantially the same as that of the above embodiment.

Preferably, the rivet terminal 172 electrically connected to the uncoated portion 146a of the first electrode current collector is used as a first electrode terminal. Also, the portion 175 other than the rivet terminal 172 in the top surface of the battery can 171 electrically connected to the uncoated portion 146b of the second electrode current collector through the second current collecting plate 176 is used as a second electrode terminal having a polarity different from that of the first electrode terminal. As such, when two electrode terminals are located on the cylindrical battery cell 170, an electrical connection component such as a bus bar may be located only on a side of the cylindrical battery cell 170. Accordingly, a structure of a battery pack may be simplified and energy density may be increased. Also, because the portion 175 used as the second electrode terminal has a substantially flat shape, a sufficient bonding area required to adhere an electrical connection component such as a bus bar may be secured. Accordingly, the cylindrical battery cell 170 may reduce resistance at a bonding portion of the electrical connection component to a desirable level.

In the present disclosure, as shown in FIG. 5, a height of an uncoated portion forming a winding turn near the core is low. Accordingly, even when the uncoated portions 146a, 146b of the bent target area D are bent toward the core center C of the electrode assembly, a cavity 112 of the core of the electrode assembly 110 may be opened upward without being blocked.

When the cavity 112 is not blocked as in FIGS. 18 and 19, it is not difficult to perform an electrolyte injection process and electrolyte injection efficiency is improved. Also, a welding process between the current collecting plate 145 and the bottom of the battery can 142 or a welding process between the current collecting plate 144 and the rivet electrode 172 may be easily performed by inserting a welding jig through the cavity 112.

A method of manufacturing an electrode assembly according to an embodiment of the present disclosure will be described. However, the same description as that made for the electrode assembly according to an embodiment of the present disclosure or the cylindrical battery cell according to an embodiment of the present disclosure will be omitted.

First, a first electrode current collector and a second electrode current collector each having a sheet shape and including an uncoated portion on a side in a longitudinal direction are prepared.

Next, the first electrode current collector, the second electrode current collector, and a separator are stacked at least once so that the separator is located between the first electrode current collector and the second electrode current collector, and then an electrode current collector-separator stack is formed so that uncoated portion of the first electrode current collector and the uncoated portion of the second electrode current collector are exposed in opposite directions in a longitudinal direction of the separator.

Next, a j elly-roll type electrode assembly is formed by winding the electrode current collector-separator stack in one direction so that the uncoated portion of the first electrode current collector and the uncoated portion of the second electrode current collector are exposed in opposite directions in a winding axis direction.

Next, the cutting line 100 is formed in a longitudinal direction of the electrode assembly in at least one of the uncoated portion of the first electrode current collector and the uncoated portion of the second electrode current collector so that the uncoated portion is divided into the remaining area R remaining to protrude in the winding axis direction and the bent target area D bent in a preset direction. The cutting line 100 may be formed by a cutter that ultrasonically vibrates in the winding axis direction of the electrode assembly. Also, the certain uncoated portion may be bent along the cutting line 100.

Next, at least a part of an uncoated portion included in the bent target area D is bent to have a plurality of layers overlapping in a bending direction of a certain uncoated portion.

Next, when the uncoated portion is bent, a current collecting plate having a shape corresponding to a shape of the bent target area D may be coupled to the uncoated portion of the bent target area D. The current collecting plate may be welded to an uncoated portion bent area in the bent target area D bent to have a plurality of overlapping layers.

A detailed description of the cutting line 100 of the bent target area D and a shape of the cutting line 100 is the same as that made for the electrode assembly or the cylindrical battery cell according to an embodiment of the present disclosure.

The cylindrical battery cell according to the embodiments (modified examples) may be used to manufacture a battery pack.

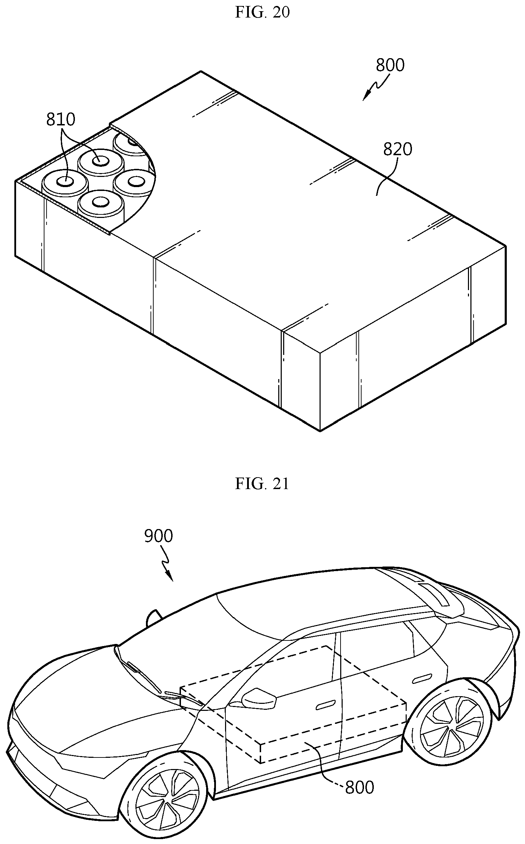

FIG. 20 is a view illustrating a configuration of a battery pack according to an embodiment of the present disclosure.

Referring to FIG. 20, a battery pack 800 according to an embodiment of the present disclosure includes an assembly to which cylindrical battery cells 810 are electrically connected and a pack housing 820 in which the assembly is accommodated. The cylindrical battery cell 810 may be any one of the battery cells according to the embodiments (modified examples). For convenience of illustration, components such as a bus bar for electrical connection of the cylindrical battery cells 810, a cooling unit, and an external unit are not shown.

The battery pack 800 may be mounted in the vehicle 900. The vehicle 900 may be, for example, an electric vehicle, a hybrid vehicle, or a plug-in hybrid vehicle. Examples of the vehicle 900 include a four-wheeled vehicle and a two-wheeled vehicle.

FIG. 21 is a view for describing a vehicle including the battery pack of FIG. 20.

Referring to FIG. 21, the vehicle 900 according to an embodiment of the present disclosure includes the battery pack 800 according to an embodiment of the present disclosure. The vehicle 900 operates by receiving power from the battery pack 800 according to an embodiment of the present disclosure.

According to an aspect of the present disclosure, because a bent target area of an uncoated portion protruding in a winding axis direction of an electrode assembly is formed in a pattern extending in a bending direction and an uncoated portion of the bent target area is bent, the degree of flatness of the uncoated portion with respect to a bent surface may be increased and a phenomenon where the uncoated portion under the bent surface is irregularly bent may be reduced.

While one or more embodiments of the present disclosure have been described with reference to the embodiments and figures, the present disclosure is not limited thereto, and it will be understood by one of ordinary skill in the art that various changes in form and details may be made therein without departing from the scope of the present disclosure as defined by the following claims.

### INDUSTRIAL APPLICABILITY

The present disclosure relates to an electrode assembly, a method of manufacturing the same, a cylindrical battery cell including the electrode assembly, and a battery pack and a vehicle including the cylindrical battery cell, and particularly, may be used in industries related to secondary batteries.

## Claims

1. An electrode assembly having a jelly-roll type structure in which a first electrode current collector and a second electrode current collector each having a sheet shape and a separator located between the first electrode current collector and the second electrode current collector are wound in one direction,
wherein at least one of the first electrode current collector and the second electrode current collector comprises an uncoated portion exposed to outside of the separator in a longitudinal direction of the electrode assembly on a long side end portion,
wherein a cutting line is formed in the longitudinal direction of the electrode assembly in at least one of the uncoated portion of the first electrode current collector and the uncoated portion of the second electrode current collector,
wherein the uncoated portion in which the cutting line is formed is divided into a remaining area remaining to protrude in a winding axis direction with respect to the cutting line and a bent target area bent in a preset direction,
wherein at least a part of an uncoated portion included in the bent target area is bent to have a plurality of layers overlapping in a bending direction of a certain uncoated portion.

2. The electrode assembly according to claim 1, wherein a current collecting plate having a shape corresponding to a shape of the bent target area is coupled to the uncoated portion of the bent target area.

3. The electrode assembly according to claim 2, wherein the current collecting plate is welded to the uncoated portion of the bent target area.

4. The electrode assembly according to claim 1, wherein the cutting line is formed by cutting at least once.

5. The electrode assembly according to claim 4, wherein the cutting line is formed by a cutter that ultrasonically vibrates in the winding axis direction of the electrode assembly.

6. The electrode assembly according to claim 6, wherein a total height of the current collecting plate and the uncoated portion after the current collecting plate is coupled to the uncoated portion of the bent target area corresponds to a height of the uncoated portion remaining to protrude in a winding axis direction of the remaining area.

7. The electrode assembly according to claim 6, wherein a total height of the current collecting plate of the bent target area and the uncoated portion under the current collecting plate is equal to a height of the uncoated portion protruding in the remaining area.

8. The electrode assembly according to claim 1, wherein there is a gap between any one uncoated portion of uncoated portions of the remaining area and the other uncoated portion.

9. The electrode assembly according to claim 8, wherein an electrolytic solution flows through the gap.

10. The electrode assembly according to claim 1, wherein the certain uncoated portion is bent along the cutting line.

11. The electrode assembly according to claim 1, wherein the bending direction of the certain uncoated portion is a radial direction of the electrode assembly.

12. The electrode assembly according to claim 1, wherein the bending direction of the certain uncoated portion is a core direction of the electrode assembly.

13. The electrode assembly according to claim 1, wherein a shape of the bent target area extends in a radial direction when viewed in the winding axis direction of the electrode assembly.

14. The electrode assembly according to claim 1, wherein a shape of the bent target area is a shape radially extending outward from a core center of the electrode assembly when viewed in the winding axis direction of the electrode assembly.

15. The electrode assembly according to claim 14, wherein the shape of the bent target area is a shape radially extending outward in two or more directions from the core center of the electrode assembly when viewed in the winding axis direction of the electrode assembly.

16. The electrode assembly according to claim 1, wherein a shape of the bent target area is a cross shape extending outward from a core center of the electrode assembly when viewed in the winding axis direction of the electrode assembly.

17. The electrode assembly according to claim 1, wherein a shape of the bent target area is a shape radially extending outward from a core center of the electrode assembly when viewed in the winding axis direction of the electrode assembly,
wherein the cutting line has an arc shape curved toward a core of the electrode assembly.

18. The electrode assembly according to claim 1, wherein at least a part of the uncoated portion included in the bent target area is bent toward a core direction of the electrode assembly.

19. The electrode assembly according to claim 1, wherein at least a part of the uncoated portion included in the bent target area is bent to have at least three layers overlapping in a radial direction of the electrode assembly.

20. The electrode assembly according to claim 1, wherein at least a part of the uncoated portion included in the bent target area is bent to have at least four layers overlapping in a radial direction of the electrode assembly.

21. The electrode assembly according to claim 1, wherein at least a part of the uncoated portion included in the bent target area is bent to have at least five layers overlapping in a radial direction of the electrode assembly.

22. The electrode assembly according to claim 1, wherein an electrode plate comprising the first electrode current collector and an active material layer formed on at least one surface of the first electrode current collector is formed,
wherein the electrode plate comprises an insulating coating layer formed at a boundary between the active material layer and the uncoated portion of the first electrode current collector,
wherein the insulating coating layer is exposed to outside of the separator, wherein a lower end of the cutting line around the bent target area is spaced apart from an end portion of the insulating coating layer.

23. The electrode assembly according to claim 1, wherein an electrode plate comprising the second electrode current collector and an active material layer formed on at least one surface of the second electrode current collector is formed,
wherein the electrode plate comprises an insulating coating layer formed at a boundary between the active material layer and the uncoated portion of the second electrode current collector,
wherein the insulating coating layer is exposed to outside of the separator, wherein a lower end of the cutting line around the bent target area is spaced apart from an end portion of the insulating coating layer.

24. A method of manufacturing an electrode assembly, the method comprising:
a step (a) of preparing a first electrode current collector and a second electrode current collector each having a sheet shape and comprising an uncoated portion on a side in a longitudinal direction;
a step (b) of stacking at least once the first electrode current collector, the second electrode current collector, and a separator so that the separator is located between the first electrode current collector and the second electrode current collector, and forming an electrode current collector-separator stack so that the uncoated portion of the first electrode current collector and the uncoated portion of the second electrode current collector are exposed in opposite directions in a longitudinal direction of the separator;
a step (c) of forming a jelly-roll type electrode assembly by winding the electrode current collector-separator stack in one direction so that the uncoated portion of the first electrode current collector and the uncoated portion of the second electrode current collector are exposed in opposite directions in a winding axis direction;
a step (d) of forming a cutting line in a longitudinal direction of the electrode assembly in at least one of the uncoated portion of the first electrode current collector and the uncoated portion of the second electrode current collector so the uncoated portion is divided into a remaining area remaining to protrude in the winding axis direction and a bent target area bent in a preset direction; and
a step (e) of bending at least a part of an uncoated portion included in the bent target area to have a plurality of layers overlapping in a bending direction of a certain uncoated portion.

25. The method of manufacturing an electrode assembly according to claim 24, wherein a current collecting plate having a shape corresponding to a shape of the bent target area is coupled to the uncoated portion of the bent target area.

26. The method of manufacturing an electrode assembly according to claim 25, wherein the current collecting plate is welded to an uncoated portion bent area in the bent target area bent to have a plurality of overlapping layers.

27. The method of manufacturing an electrode assembly according to claim 24, wherein the cutting line is formed by a cutter that ultrasonically vibrates in the winding axis direction of the electrode assembly.

28. The method of manufacturing an electrode assembly according to claim 24, wherein the certain uncoated portion is bent along the cutting line.

29. The method of manufacturing an electrode assembly according to claim 24, wherein the bent target area comprises a plurality of cutting lines,
wherein the plurality of cutting lines are paired and each pair extends in a radial direction of the electrode assembly when viewed in the winding axis direction of the electrode assembly.

30. The method of manufacturing an electrode assembly according to claim 24, wherein the bent target area comprises a plurality of cutting lines,
wherein the plurality of cutting lines are paired and each pair extends radially outward from a core center of the electrode assembly when viewed in the winding axis direction of the electrode assembly.

31. The method of manufacturing an electrode assembly according to claim 24, wherein the bent target area comprises a plurality of cutting lines,
wherein each of the plurality of cutting lines has an arc shape curved toward a core center of the electrode assembly when viewed in the winding axis direction of the electrode assembly.

32. The method of manufacturing an electrode assembly according to claim 24, wherein, in the step (e), at least a part of the uncoated portion included in the bent target area is bent toward a core direction of the electrode assembly.

33. The method of manufacturing an electrode assembly according to claim 24, wherein, in the step (e), at least a part of the uncoated portion included in the bent target area is bent to have at least three layers overlapping in a radial direction of the electrode assembly.

34. The method of manufacturing an electrode assembly according to claim 24, wherein, in the step (e), at least a part of the uncoated portion included in the bent target area is bent to have at least four layers overlapping in a radial direction of the electrode assembly.

35. The method of manufacturing an electrode assembly according to claim 24, wherein, in the step (e), at least a part of the uncoated portion included in the bent target area is bent to have at least five layers overlapping in a radial direction of the electrode assembly.

36. A cylindrical battery cell comprising:
an electrode assembly having a jelly-roll type structure in which a first electrode current collector and a second electrode current collector each having a sheet shape and a separator located between the first electrode current collector and the second electrode current collector are wound in one direction, wherein at least one of the first electrode current collector and the second electrode current collector comprises an uncoated portion exposed to outside of the separator in a longitudinal direction of the electrode assembly on a long side end portion, wherein a cutting line is formed in the longitudinal direction of the electrode assembly in at least one of the uncoated portion of the first electrode current collector and the uncoated portion of the second electrode current collector, wherein the uncoated portion in which the cutting line is formed is divided into a remaining area remaining to protrude in a winding axis direction with respect to the cutting line and a bent target area bent in a preset direction, wherein at least a part of an uncoated portion included in the bent target area is bent to have a plurality of layers overlapping in a bending direction of a certain uncoated portion;
a cylindrical battery can in which the electrode assembly is accommodated and that is electrically connected to the second electrode current collector;
a sealing body configured to seal an open end of the battery can;
an external terminal electrically connected to the first electrode current collector and having a surface exposed to outside; and
a current collecting plate welded to a bent surface of the uncoated portion and electrically connected to any one of the battery can and the external terminal.

37. A battery pack comprising the cylindrical battery cell according to claim 36.

38. A vehicle comprising the battery pack according to claim 37.
